# EUROPÄISCHE PATENTSCHRIFT

(11) **EP 0 706 152 B1**
(45) Veröffentlichungstag und Bekanntmachung des Hinweises auf die Patenterteilung: **10.06.1998**
(21) Anmeldenummer: 95116717.0
(22) Anmeldetag: 24.10.1995
(51) Int. Cl.: G06K 19/077

(54) **Basis Folie für Chip Karte**
Base sheet for chip card
Feuille de base pour carte à puce

(30) Priorität: 03.11.1994 CH 3279/94
(43) Veröffentlichungstag der Anmeldung: 10.04.1996
(73) Patentinhaber: Fela Holding AG, 8512 Thundorf (CH)
(72) Erfinder: Uhlmann, Ernst, CH-9507 Stettfurt (CH)
(74) Vertreter: Petschner, Goetz

(56) Entgegenhaltungen:
- EP-A- 0 189 039
- EP-A- 0 246 744
- WO-A-85/02046

## Beschreibung

Die vorliegende Erfindung betrifft eine Basis-Folie für laminierte kontaktbehaftete oder kontaktlose Chip-Karte, die mindestens aus der, mindestens einen Chip tragenden Basis-Folie aus thermoplastischem Kunststoffmaterial, einer Kern-Folie aus thermoplastischem Kunststoffmaterial mit einer den Chip zentrierenden Aussparung und einer Deck-Folie aus thermoplastischem Kunststoffmaterial besteht, welche Folien unter Druck und Hitze zusammengefügt sind.

Eine Chip-Karte der vorgenannten Art ist bereits durch die EP-A-0 246 744 bekannt geworden (siehe Präambeln der Ansprüche 1 und 6). Zur Herstellung wird dabei zuerst die Kernfolie der Karte mit Leiterbahnen und Chip versehen, und anschliessend mit Deckfolien laminiert.

Andere Chip-Karten und deren Herstellungsverfahren verlangen zunächst ein aufwendiges Klebeverfahren mit Cyan-Acrylatklebern oder im Hot-melt-Verfahren zwischen Epoxidharz- oder Polimid- oder Polyester-Basismaterial der Basis-Folien und dem Kunststoff der Chip-Karte, wobei die unterschiedlichen Temperaturausdehnungskoeffizienten zwischen Basis-Folie und Chip-Kartenmaterial Verwölben und/oder Durchbiegen und/oder Delaminieren bewirken können. Zudem ist eine aufwendige und energieintensive Verkapselung des Chips auf der Basis-Folie zum Schutz der feinen wire-bond-Drähte unerlässlich. Weiter ist hier von erheblichem Nachteil, dass, um solche Cip-Karten nach den heutigen Anforderungen ausreichend "dünn" gestalten zu können, eine sehr kostenintensive Läppung des zu den Chips zu verarbeitenden Siliziumwafer, vor dem Sägen in die einzelnen Chips, notwendig ist.

Diese bekannten Herstellungsmassnahmen erfordern somit einen hohen Werkzeug- und Einrichtungsaufwand, der sehr hohe Kosten für solche Chip-Karten bewirkt.

Es ist somit Aufgabe der vorliegenden Erfindung, eine Basis-Folie für eine Chip-Karte der vorgenannten Art zu schaffen, die es gestattet, Chip-Karten bedeutend einfacher herzustellen, die dadurch ausreichend dünn (im 0,7mm bis 0,8 mm-Bereich) gestaltet werden können und sich durch wesentlich geringere Kosten auszeichnen.

Die wird nun erfindungsgemäss dadurch erreicht, dass die Basis-Folie ein vorgefertigtes Inlet ist, auf dem durch Metallisieren und Strukturieren oder Aufdrucken Leiterbahnen aufgebracht sind die wenigstens teilweise eine Antennen-Spule bilden und auf dem der Chip fest angeordnet ist.

Hierbei kann der Chip auf die Leiterbahnen in flip-chip-Technik resp. ohne wire-bond-Verbindung mittels Leitkleber montiert sein.

Zudem kann die Basis-Folie für Chip-Karte mit Kontakten auf deren Aussenseite weitere Leiterbahnen aufweisen, die mit Anschlüssen für den Chip auf der Innenseite der Basis-Folie durch mit Leiterkleber gefüllte Durchkontaktierungsbohrungen verbunden sind.

Daraus ergibt sich eine äusserst kostengünstige Herstellung von Chip-Karten unter Gewährung einer hohen technischen Qualität, wobei die Karte genügend dünn gestaltet werden kann.

Entsprechend betrifft die vorliegende Erfindung auch ein Verfahren zur Herstellung einer Chip-Karte mit einer als vorgefertigtes Inlet ausgebildeten Basis-Folie aus thermoplastischem Kunststoffmaterial, wobei die Basis-Folie durch Metallisieren und Struktuieren oder Bedrucken von Leiterbahnen, die wenigstens teilweise eine Antennen-Spule bilden, Bedrucken der Anschlussstellen für den Chip mit Leitkleber sowie Aufbringen des Chips als Inlet vorgefertigt wird, dann eine den Chip umgebende und zentrierende Kern-Folie sowie eine den Chip abdeckende Deck-Folie aus thermoplastischem Kunststoffmaterial aufgebracht werden sowie dann das Ganze in einer Laminierpresse unter vorgegebener Temperatur und vorgegebenem Druck laminiert wird.

Hierbei kann ein Aufbringen eines Druckbildes auf der freien Seite der Basis-Folie erfolgen.

Eine derart hergestellte laminierte, kontaktbehaftete oder kontaktlose Chip-Karte, welche mindestens aus einer, einen Chip tragenden Basis-Folie aus thermoplastischem Kunststoffmaterial, einer Kern-Folie aus thermoplastischem Kunststoffmaterial mit einer den Chip zentrierenden Aussparung und einer Deck-Folie aus thermoplastischem Kunststoffmaterial bestehen, die unter Druck und Hitze zusammengefügt sind, zeichnet sich erfindungsgemäss dann dadurch aus, dass die Basis-Folie ein vorgefertigtes Inlet ist, auf dem durch Metallisieren und Strukturieren oder Aufdrucken Leiterbahnen aufgebracht sind, die wenigstens teilweise eine Antennen-Spule bilden, und auf dem der Chip auf die Leiterbahnen in flip-chip-Technik resp. ohne wire-bond-Verbindung mittels Leitkleber montiert ist.

Bei einer Chip-Karte mit Kontakten kann dann die Basis-Folie auf deren Aussenseite Leiterbahnen aufweisen, die mit Anschlüssen für den Chip auf der Innenseite der Basis-Folie durch mit Leiterkleber gefüllte Durchkontaktierungsbohrungen verbunden sind.

Ferner kann sich eine Chip-Karte auszeichnen durch die Kombination der Merkmale der Chip-Karte mit Kontakten und der kontaktlosen Chip-Karte.

Beispielsweise Ausführungsformen des Erfindungsgegenstandes sind nachfolgend anhand der Zeichnung näher erläutert. Es zeigen:
- Fig. 1 und 2: in Draufsicht und Seitenansicht eine Chip-Karte mit Kontakten in wenigstens angenähert natürlicher Grösse;
- Fig. 3: einen Querschnitt durch die Chip-Karte gemäss Fig. 1 im Bereich des Chips, in grösserem Massstab;
- Fig. 4: die Basis-Folie einer kontaktlosen Chip-Karte;
- Fig. 5: einen Querschnitt durch die Chip-Karte gemäss Fig. 4 im Bereich des Chips, in grösserem Massstab;
- Fig. 6: in Draufsicht eine kombinierte Chip-Karte des Prinzipes mit Kontakten und kontaktlos und
- Fig. 7: in Explosivdarstellung eine kontaktlose Chip-Karte mit Inlet, in grösserem Massstab.

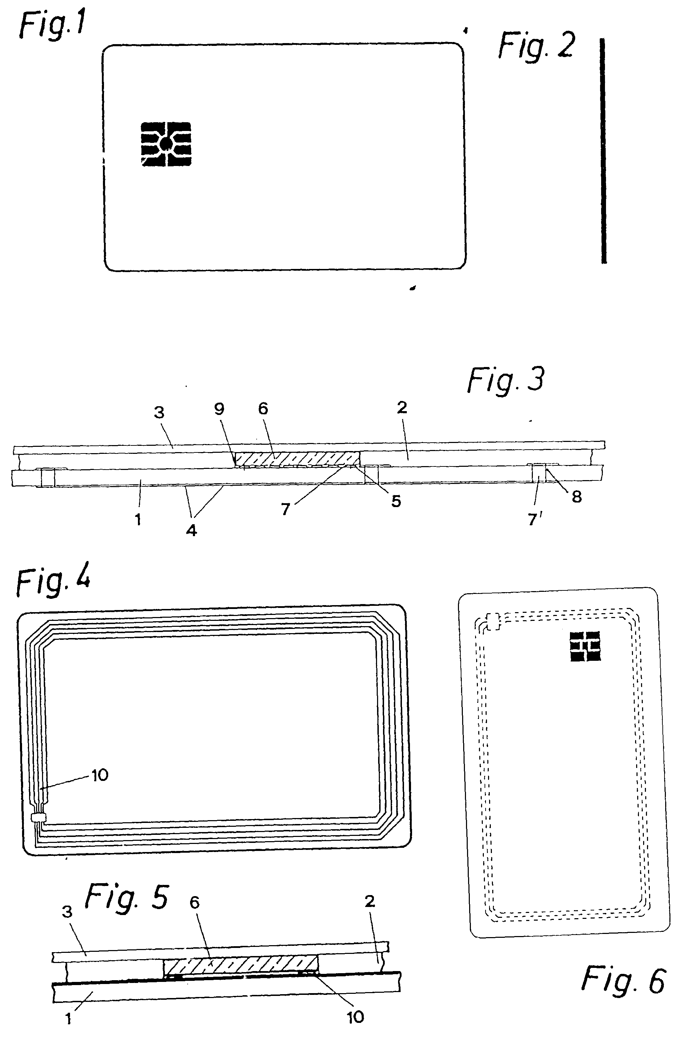

Die erfindungsgemässe Chip-Karte, hier mit Kontakten, gemäss den Fig. 1,2 und 3, besteht vorzugsweise aus drei laminierten Lagen von Kunststoff-Folien 1,2 und 3 vorzugsweise gleichen Materials, wie PVC (Polyvinylchlorid), PET (Polycarbonat), ABS (Acrylnitrit-Butadien-Styrol), PC (Polycarbonat) u. a., sowie Mischformen und modifizierte Grundmaterialien, wie PC/ABS, PETG, APET, PMMA u. dgl. Die hier unterste Folie 1 bildet die Basis-Folie und ist erfindungsgemäss als Substrat resp. Leiterplatte durch Metallisieren und Strukturieren von Leiterbahnen 4,5 ausgebildet. Auf dieser Leiterplatte 1 ist dann der Chip 6 in der sogenannten flip-chip-Technik resp. ohne wire-bond-Verbindung mittels einem, beim Laminieren aushärtenden Leitkleber 7 montiert, wie Fig. 3 näher veranschaulicht. Für diese flip-chip-Technik weisen die Anschlussflächen des Chips sogenannte Bumps in Form einer galvanisch oder chemisch aufgebrachten Überhöhung aus Gold, Kupfer oder Nickel auf den Anschlussflächen oder einer Golddrahtauflage o. dgl. auf, um eine punktierte Verklebung mit Leitkleber zu ermöglichen. Wie weiter ersichtlich, trägt die Leiterplatte resp. Basis-Folie 1 die vernlckelten und vergoldeten Kontakte 4 auf der Aussenseite. Auf der Innenseite sind die Anschlüsse 5 für den Chip 6 aufgebracht. Die Anschlüsse 5 für den Chip 6 sind mit den Kontaktflächen 4 durch kleine Durchkontaktierungslöcher 8, die mit dem Leitkleber 7' gefüllt sind, verbunden. Der Chip 6 sitzt in einer zentrierenden Ausnehmung 9 der sogenannten Kern-Folie 2, welche nach aussen durch die Deckfolie 3, welche bedruckt sein oder eine weitere Bild-Folie o. dgl. tragen kann, abgeschlossen ist. Die Kern-Folie 2 kann mittels Referenzstifte auf der Basis-Folie 1 positioniert sein (nicht gezeigt).

Ein solche vorbeschriebene Chip-Karte ist frei von Verwerfungen und Delaminierungen und ist äusserst einfach und kostengünstig herzustellen, indem zunächst die Basis-Folie durch Metallisieren und Struktuieren der Leiterbahnen sowie Bedrucken der Anschlussstellen für den Chip mit Leitkleber (flip-chip-Technik), vorzugsweise im Siebdruckverfahren, gegebenenfalls Durchschaltung von der Innenseite zur Aussenseite mittels mit Leitkleber zu füllenden Kontaktbohrungen, als Substrat resp. Leiterplatte ausgebildet, dann der Chip mit einer Ausnehmung in der Kern-Folie und durch deren zentriertes Aufbringen auf dem Substrat auf diesem fixiert angeordnet, dann die Kern-Folie mit einer weiteren Folie überdeckt und dann das Ganze in einer Laminierpresse unter vorgegebener Temperatur und vorgegebenem Druck laminiert wird unter gleichzeitigem Aushärten des Leitklebers.

Selbstverständlich kann auch die Kern-Folie 2 und die Deck-Folie 3 als einstükkige Schale ausgebildet sein.

Das Ganze kann ferner als Mehrfachbögen hergestellt werden, wonach dann die Karten-Konturen gestanzt werden können. Zudem lassen sich die Aussenseiten der Chip-Karte bedrucken, beispielsweise im 4-Farben-Offsetdruck oder Siebdruck, oder direkt in einem Drucker im Thermosublimationsverfahren.

Eine kontaktlose Chip-Karte nach den Fig. 4 und 5 hingegen hat in ihrem Inneren eine Antennenspule 10, welche auf der metallisierten Innenseite des Substrates 1 struckturiert ist.

Somit wird hier bei der Herstellung lediglich die Innenseite der Basis-Folie metallisiert und strukturiert.

Die kombinierte Chip-Karte gemäss Fig. 6 hat nun im Inneren eine Antennenspule 10 gemäss den Fig. 4,5 sowie aussen die Kontakte 4 gemäss Fig. 3. Entsprechend wird eine solche Chip-Karte in Kombination wie vorbeschrieben hergestellt.

Aus dem Vorbeschriebenen ergibt sich somit eine Chip-Karte von geringen Kosten, von hoher technischer Qualität und von breitem Anwendungsspektrum.

Hierbei ist natürlich die Erfindung nicht auf Kartenformen üblicher Art beschränkt, sondern kann auch als Chip-Halbkarte, Schlüsselkopf, Knopf, Armband, Uhrenbestandteil u. dgl. ausgebildet sein, je nach infrage stehendem Identifikations- oder Wertsystem.

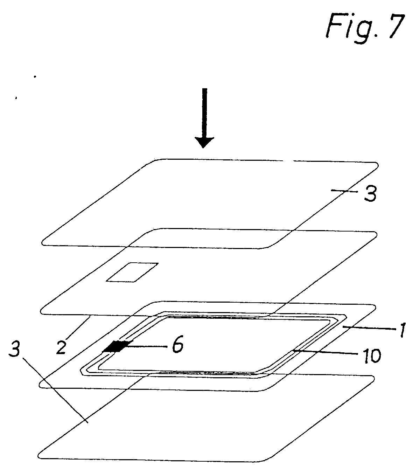

Bei der Chip-Karte gemäss Fig. 7 bildet die Basis-Folie 1 aus thermoplastischem Kunststoff ein sogenanntes Inlet, das zweckmässig mit Antennen-Spule 10 und Chip 6 vorgefertigt ist. Zudem kann die freie Seite des Inlets mit einem Druckbild bedruckt sein. Das Ganze wird dann durch Kern-Folie 2 und Deck-Folien 3 ergänzt. Dabei ist bei bedrucktem Inlet die untere Deck-Folie transparent. Alternativ können auch die Deck-Folien bedruckt sein.

## Patentansprüche

1. Basis-Folie für laminierte kontaktbehaftete oder kontaktlose Chip-Karte, die mindestens aus der, mindestens einen Chip (6) tragenden Basis-Folie (1) aus thermoplastischem Kunststoffmaterial, einer Kern-Folie (2) aus thermoplastischem Kunststoffmaterial mit einer den Chip zentrierenden Aussparung (9) und einer Deck-Folie (3) aus thermoplastischem Kunststoffmaterial besteht, welche Folien mindestens die Höhe und Breite der Chip-Karte haben und unter Druck und Hitze zusammengefügt sind,
dadurch gekennzeichnet,
dass die Basis-Folie (1) ein vorgefertigtes Inlet ist , auf dem durch Metallisieren und Strukturieren oder Aufdrucken Leiterbahnen (10) aufgebracht sind, die wenigstens teilweise eine Antennen-Spule bilden und auf dem der Chip fest angeordnet ist.

2. Basis-Folie für Chip-Karte nach Anspruch 1, dadurch gekennzeichnet, dass der Chip (6) auf die Leiterbahnen in flip-chip-Technik resp. ohne wire-bond-Verbindung mittels Leitkleber montiert ist.

3. Basis-Folie für Chip-Karte mit Kontakten, nach den Ansprüchen 1 und 2, dadurch gekennzeichnet, dass die Basis-Folie (1) auf deren Aussenseite weitere Leiterbahnen (4) aufweist, die mit Anschlüssen (5) für den Chip (6) auf der Innenseite der Basis-Folie durch mit Leiterkleber gefüllte Durchkontaktierungsbohrungen (8) verbunden sind.

4. Verfahren zur Herstellung einer Chip-Karte mit einer als vorgefertigtes Inlet ausgebildeten Basis-Folie aus thermoplastischem Kunststoffmaterial nach einem der Ansprüche 1 oder 2, wobei die Basis-Folie durch Metallisieren und Struktuieren oder Bedrucken von Leiterbahnen, die wenigstens teilweise eine Antennen-Spule bilden, Bedrucken der Anschlussstellen für den Chip mit Leitkleber sowie Aufbringen des Chips als Inlet vorgefertigt wird, dann eine den Chip umgebende und zentrierende Kern-Folie sowie eine den Chip abdeckende Deck-Folie aus thermoplastischem Kunststoffmaterial aufgebracht werden sowie dann das Ganze in einer Laminierpresse unter vorgegebener Temperatur und vorgegebenem Druck laminiert wird.

5. Verfahren nach Anspruch 4, gekennzeichnet durch ein Aufbringen eines Druckbildes auf der freien Seite der Basis-Folie.

6. Laminierte, kontaktbehaftete oder kontaktlose Chip-Karte, welche mindestens aus einer, einen Chip tragenden Basis-Folie aus thermoplastischem Kunststoffmaterial, einer Kern-Folie aus thermoplastischem Kunststoffmaterial mit einer den Chip zentrierenden Aussparung und einer Deck-Folie aus thermoplastischem Kunststoffmaterial bestehen, welche Folien die Höhe und Breite der Chip-Karte haben und unter Druck und Hitze zusammengefügt sind,
dadurch gekennzeichnet,
dass die Basis-Folie (1) ein vorgefertigtes Inlet ist , auf dem durch Metallisieren und Strukturieren oder Aufdrucken Leiterbahnen (10) aufgebracht sind, die wenigstens teilweise eine Antennen-Spule bilden, und auf dem der Chip (6) auf die Leiterbahnen in flip-chip-Technik resp. ohne wire-bond-Verbindung mittels Leitkleber montiert ist.

7. Chip-Karte mit Kontakten, nach Anspruch 6, dadurch gekennzeichnet, dass die Basis-Folie (1) auf deren Aussenseite Leiterbahnen (4) aufweist, die mit Anschlüssen (5) für den Chip (6) auf der Innenseite der Basis-Folie durch mit Leiterkleber gefüllte Durchkontaktierungsbohrungen (8) verbunden sind.

8. Chip-Karte nach den Ansprüchen 6 und 7, gekennzeichnet durch die Kombination der Merkmale der Chip-Karte mit Kontakten und der kontaktlosen Chip-Karte.

## Claims

1. Base sheet for a laminated chip card equipped with or free of contacts, which consists at least of the base sheet (1), which carries at least one chip (6), of thermoplastic synthetic material, a core sheet (2) of thermoplastic synthetic material with a recess (9) centring the chip and a cover sheet (3) of thermoplastic synthetic material, which sheets have at least the height and width of the chip card and are joined together under pressure and heat, characterised thereby that the base sheet (1) is a prefabricated inlet on which conductor tracks (10), which at least in part form an antenna coil, are applied by metallising and structuring or printing and on which the chip is fixedly arranged.

2. Base sheet for a chip card according to claim 1, characterised thereby that the chip (6) is mounted on the conductor tracks in flip-chip technique or without a wire-bond connection by means of conductive adhesive.

3. Base sheet for a chip card with contacts, according to claims 1 and 2, characterised thereby that the base sheet (1) has on the outer side thereof further conductor tracks (4) which are connected with terminals (5) for the chip (6) on the inner side of the base sheet by contacting-through bores (8) filled with conductive adhesive.

4. Method of manufacturing a chip card with a base sheet, which is constructed as a prefabricated inlet, of thermoplastic synthetic material according to one of claims 1 and 2, wherein the base sheet is prefabricated as an inlet by metallising and structuring or printing of conductor tracks, which at least in part form an antenna coil, printing of the terminal locations for the chip with conductive adhesive as well as mounting of the chip, then a core sheet, which surrounds and centres the chip, as well as a cover sheet, which covers the chip, of thermoplastic synthetic material are applied, and then the whole is laminated in a laminating press under predetermined temperature and predetermined pressure.

5. Method according to claim 4, characterised by an application of a printed image on the free side of the base sheet.

6. Laminated chip card equipped with or free of contacts, which consists at least of a base sheet, which carries a chip, of thermoplastic synthetic material, a core sheet of thermoplastic synthetic material with a recess centring the chip and a cover sheet of thermoplastic synthetic material, which sheets have at least the height and width of the chip card and are joined together under pressure and heat, characterised thereby that the base sheet (1) is a prefabricated inlet on which conductor tracks (10), which at least in part form an antenna coil, are applied by metallising and structuring or printing and on which the chip (6) is mounted on the conductor tracks in flip-chip technique or without a wire-bond connection by means of conductive adhesive.

7. Chip card with contacts, according to claim 6, characterised thereby that the base sheet (1) has on the outer side thereof further conductor tracks (4) which are connected with terminals (5) for the chip (6) on the inner side of the base sheet by contacting-through bores (8) filled with conductive adhesive.

8. Chip card according to claims 6 and 7, characterised by the combination of the features of the chip card with contacts and the chip card free of contacts.

## Revendications

1. Feuille de base pour une carte à puce laminée à contacts ou sans contacts qui est constituée au moins par la feuille de base (1) en matière synthétique thermoplastique portant une puce (6), une feuille formant noyau (2) en matière synthétique thermoplastique avec un évidement (9) centrant la puce et une feuille de recouvrement (3) en matière synthétique thermoplastique, lesdites feuilles ayant au moins la hauteur et la largeur de la carte à puce et sont assemblées sous pression et chaleur,
caractérisée en ce que
la feuille de base (1) est une entrée préfabriquée sur laquelle sont appliqués par métallisation et structuration ou impression des circuits conducteurs (10) qui forment au moins partiellement une bobine d'antenne et sur laquelle la puce est disposée fixement.

2. Feuille de base pour une carte à puce selon la revendication 1, caractérisée en ce que la puce (6) est montée sur les circuits conducteurs selon la technique flip-chip respectivement sans liaison câblée par une colle conductrice.

3. Feuille de base pour une carte à puce à contacts, selon les revendications 1 et 2, caractérisée en ce que la feuille de base (1) présente sur son côté extérieur d'autres circuits conducteurs (4) qui sont reliés à des raccords (5) pour la puce (6) sur le côté intérieur de la feuille de base par des perçages traversants de contact (8) remplis de colle conductrice.

4. Procédé de fabrication d'une carte à puce avec une feuille de base en matière synthétique thermoplastique réalisée sous forme d'entrée préfabriquée selon l'une des revendications 1 ou 2, où la feuille de base est préfabriquée comme entrée par métallisation et structuration ou impression de circuits conducteurs qui forment au moins partiellement une bobine d'antenne, impression des emplacements de raccordement de la puce par de la colle conductrice ainsi que l'application de la puce, et ensuite une feuille formant noyau entourant et centrant la puce ainsi qu'une feuille de recouvrement en matière synthétique thermoplastique recouvrant la puce sont appliquées, et ensuite l'ensemble est laminé dans une presse à laminer sous une température prédéfinie et une pression prédéfinie.

5. Procédé selon la revendication 4, caractérisé par une application d'une image d'impression sur le côté libre de la feuille de base.

6. Carte à puce laminée à contacts ou sans contacts qui est constituée d'au moins une feuille de base en matière synthétique thermoplastique portant la puce, d'une feuille formant noyau en matière synthétique thermoplastique avec un évidement centrant la puce et d'une feuille de recouvrement en matière synthétique thermoplastique, lesdites feuilles ayant la hauteur et la largeur de la carte à puce et sont assemblées sous pression et chaleur,
caractérisée en ce que
la feuille de base (1) est une entrée préfabriquée sur laquelle sont appliqués par métallisation et structuration ou impression des circuits conducteurs (10) qui forment au moins partiellement une bobine d'antenne et sur laquelle la puce (6) est montée sur les circuits conducteurs suivant la technique flip-chip respectivement sans liaison câblée par de la colle conductrice.

7. Carte à puce à contacts selon la revendication 6, caractérisée en ce que la feuille de base (1) présente sur son côté extérieur des circuits conducteurs (4) qui sont reliés à des raccords (5) pour la puce (6) sur le côté inférieur de la feuille de base par des perçages traversants de contact (8) remplis de colle conductrice.

8. Carte à puce selon les revendications 6 et 7, caractérisée par la combinaison des caractéristiques de la carte à puce à contacts et de la carte à puce sans contacts.
